(19) Europäisches Patentamt
European Patent Office
Office européen des brevets

(11) Publication number: **0 421 958 B1**

## (12) EUROPEAN PATENT SPECIFICATION

(45) Date of publication of patent specification: **14.09.94**

(51) Int. Cl.5: **B63B 1/32**, B63B 1/12

(21) Application number: **90830436.3**

(22) Date of filing: **04.10.90**

(54) **High-speed hydrohull.**

(30) Priority: **05.10.89 IT 953789**

(43) Date of publication of application:
**10.04.91 Bulletin 91/15**

(45) Publication of the grant of the patent:
**14.09.94 Bulletin 94/37**

(84) Designated Contracting States:
**DE ES FR GB GR NL SE**

(56) References cited:
**WO-A-89/11414**
**GB-A- 2 200 598**
**US-A- 3 221 831**
**US-A- 3 390 655**
**US-A- 3 918 382**

**MOTORBOAT & YACHTING, vol. 115, no. 2383, 20th August 1971, pages 26-29; "Aerodynamic hull shapes"**

(73) Proprietor: **Micheletti, Pietro**
**Via San Pantaleone**
**I-55058 S. Maria del Giudice, Lucca (IT)**

(72) Inventor: **Micheletti, Pietro**
**Via San Pantaleone**
**I-55058 S. Maria del Giudice, Lucca (IT)**

(74) Representative: **Baccaro Mannucci, Luisa et al**
**Ufficio Tecnico Ing. A. Mannucci**
**Via della Scala 4**
**I-50123 Firenze (IT)**

## Description

The invention relates to a hydrohull which is particularly suitable for high speeds and enables the craft to be raised so that it is over the water, according to the preamble of claim 1.

It is known that the resistance encountered by a body in motion in a fluid is given by the relation:

$$R = C_r \, 1/2 \, r \, S \, V^2$$

where $C_r$ is a coefficient of resistance given by the shape of the body in motion, S is its surface area, V its speed and r the density of the fluid. In a craft, the aerodynamic resistance is negligible compared to the hydrodynamic resistance so long as the craft is moving at a relatively low speed, but as speed increases the craft rises out of the water until it is planing and contact with the water becomes intermittent and occurs over a very small area. The surface area which is instead in contact with the air increases because of the lifting of the craft, so that the aerodynamic resistance rises with the increased contact area and increases at a geometric rate with the increase in speed. The overall resistance to the advance of the craft is given therefore by:

$$R_o = R_1 + R_2$$

where $R_1$ and $R_2$ are the hydrodynamic and aerodynamic resistances respectively. In crafts according to the state of the art, the weight of the craft is balanced by a hydrodynamic lift. Said hydrodynamic lift is proportional to the square of the speed of the craft. At the same time, also the hydrodynamic resistance is proportional to the square of the speed, so that a high hydrodynamic lift necessary to support a heavy craft necessarily generates a high hydrodynamic resistance. Moreover, also the aerodynamic resistance increases with the square of the speed and thus the power necessary to maintain the craft in motion is proportional to the cube of the speed, and a considerable amount of this power is required just to overcome the aerodynamic resistance.

An object of the present invention is a hydrohull which is able to reduce the hydrodynamic resistance almost up to 0 when it moves at high speeds. It is a further object of the invention to reduce the aerodynamic resistance when the hydrohul moves at high speeds.

These and other objects, which will become clear on reading the text which follows, are achieved with a high-speed hydrohull according to claim 1.

From US-A-3 390 655 a hydrohull is known with an airfoil profile portion connected to two longitudinally extending floats having a substantially continuous lower profile. This known hydrohull is of the air-cushion sustained catamaran type and, in one embodiment, is provided with additional turbojet engines arranged in the central airfoil-profile portion. Said engines should provide a vertical thrust in order to give low attitude flight capabilities to the hydrohull.

From WO-A-8911414 a high speed vessel is known with a central hull and lateral wings carrying float sponsons. The sponsons are step-shaped, while the actual central hull is smooth.

The shaping as an airfoil profile enables two objects to be simultaneously achieved: on the one hand the reduction in the resistance to advance even at high speeds, that is with the hull in practice completely out of the water; and on the other hand the same shaping of the hydrohull helps to raise said hydrohull, quickly carrying it up over the water, thereby in practice cancelling the hydrodynamic resistance.

In practice the lower surface of said portion with the airfoil profile can be substantially plane, but different profiles are not excluded, whether concave or convex depending on the speed and aerodynamic characteristics which it is desired to obtain.

The hulls or floats estend along the side walls of the hydrohull, projecting below the lower surface of said portion with the airfoil profile, and these are immersed in the water when the hydrohull is at rest or is moving at low speed, so as to provide the hydrostatic thrust required for floating. In addition, said hulls eliminate the tendency for the pressures to equalize over the upper and lower surfaces respectively of the portion with the airfoil profile, thereby avoiding the formation of induced resistances.

Two ailerons may be associated with the hull, said ailerons being controllable independently of each other to ensure the horizontal and vertical stability of the hydrohull. At least one vertical stabilizer may also be provided extending above the hydrohull and equipped with a directional rudder. Advantageously, two vertical stabilizers may be provided arranged symmetrically with respect to the middle of the hydrohull in the vicinity of the stern.

The hydrohull may be equipped with a first propulsion means, for example a submerged screw, which is activated when the hydrohull is immersed, and an auxiliary propulsion means for propulsion when the hydrohull is raised above the water.

The invention will be better understood by following the description and the attached drawing, which shows a practical nonlimiting embodiment of said invention. In the drawing:

Figs. 1 and 2 show a diagrammatic side view and a rear view from II-II of a hydrohull according to the invention;

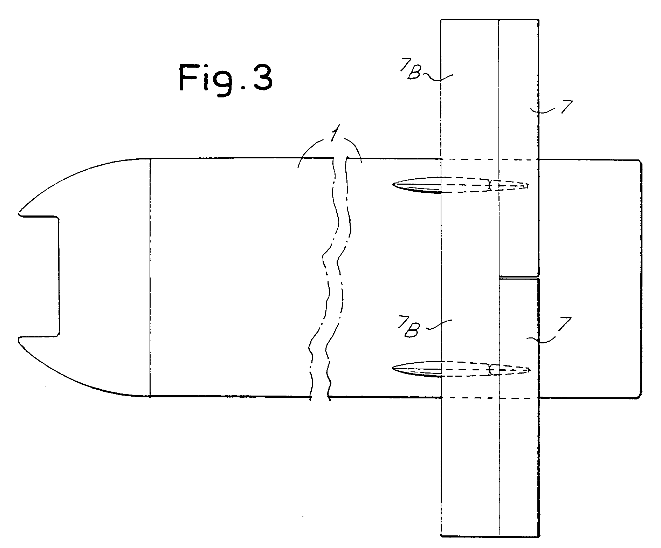

Fig. 3 shows a plan view from III-III of Fig. 2.

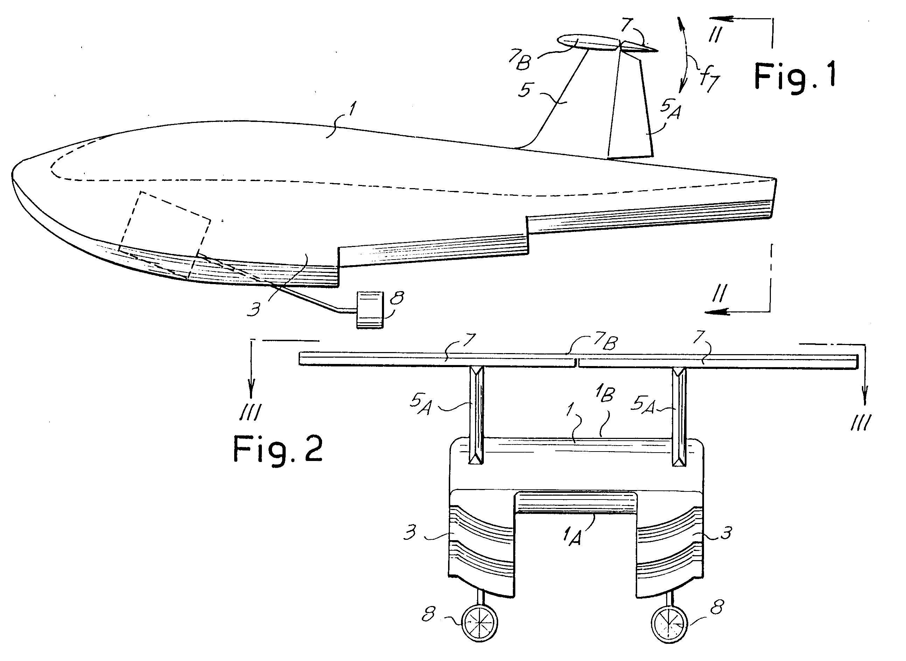

As shown in particular by Fig. 1, the craft presents an upper portion 1 with an airfoil profile having a slightly concave lower surface, which is intended to remain constantly in the air and offers very low aerodynamic resistance. The fluid threads of air which strike the bows of the craft flow over the lower surface 1A and over the upper convex surface 1B of the portion 1, producing lift due to depression, by the Bernoulli principle, with the center of pressure at about a third of the chord of the profile of said portion 1.

Beneath the portion 1 of the hydrohull two further portions 3 are provided, extending longitudinally along the hydrohull as downward extensions of the craft's sides, which portions are intended to remain immersed in the water when the craft is at rest or is moving at low speed, thus providing the hydrostatic thrust required for floating. The two portions or floats 3 also perform a further important aerodynamic function. In fact, when the craft is moving at high speed and planing over the water, because of the shape of the surfaces 1A and 1B the air pressure over the lower surface 1A is greater than the pressure over the upper surface 1B, so that there is a tendency toward the formation of a current of fluid (air) from the lower surface to the upper surface with consequent formation of turbulence and induced resistance. The presence of the floats 3 prevents the formation of the said turbulence and therefore reduces the induced resistance.

At the stern of the craft two vertical stabilizers 5 are provided with synchronized directional rudders 5A, able to control the direction of the craft when it is lifted out of the water and the water rudder is no longer able to steer said craft.

Besides the vertical stabilizers 5, at the stern of the craft two independently movable ailerons 7 are also arranged, which project from the hull, in such a way as to avoid staying in the lee, from the top of the vertical stabilizer. Said ailerons have an airfoil profile and can be tilted independently of each other as shown by the double arrow f7 (Fig. 1), in such a way as to vary the resultant and the point of application of the resultant of the pressure forces on each aileron. The forces which develop on the ailerons 7 may be lifting or downthrusting, that is directed upwards or downwards, according to the tilt which they assume. In this way it is possible to ensure the vertical equilibrium of the craft when out of the water. In fact, said equilibrium is given by the action of the pressure force on the portion 1, by the weight of the craft and by the pressure forces (lifting or downthrusting) on the two ailerons 7. By modifying the trim of the ailerons it is possible to shift the center of pressure to coincide with the barycenter, cancelling out any capsizing couple which may develop when the craft changes trim due to its own increase in speed. Also, since the ailerons can be tilted independently of each other, they can also be used to ensure the horizontal stability of the craft when out of the water by creating the lifting or downthrusting forces on the ailerons with variable moduli, independently for the two ailerons.

As clearly shown in Fig. 1, the piloting position is completely internal to the deck line, and the deck thus presents no protuberance which could generate resistance and turbulence. Visibility is ensured by a large transparent canopy.

The propulsion of the craft is provided in the first place by immersed screws 8 which provides the thrust when the hull is immersed. Conversely, when the hull is out of the water auxiliary propulsion means may become necessary, particularly when the hull is designed to rise noticeably out of the water and in such a way that the screw is no longer immersed. A small jet engine is provided at the stern. It is however possible to use any other suitable propulsion means.

The portions or hulls 3 are step-shaped, so that they are thicker toward the prow and thinner toward the stern. An optimal position of the center of gravity is thus obtained. In fact, the center of gravity is placed approximately at one third of the length of the hydrohull from the prow and its position with respect to the position of the center of pressure is such that the hydrohull is self-stabilizing.

Moreover, the ailerons 7 are combined to a fixed airfoil portion 7B which extends between the two stabilizers 5.

Figs. 4 and 5 also show the possible position of two screws 8. Fig. 4 also shows in broken line the profile of the upper portion 1 which in this case has a lower concave surface.

## Claims

1. A high-speed hydrohull comprising: a central portion (1) having, in a longitudinal section, an airfoil profile with a low coefficient of aerodynamic resistance, having convex upper surface (1B) in order to create a lift during the movement of the hydrohull; two hulls (3) extending along the side walls of the central portion, projecting below the lower surface (1A) of said central portion (1); and ailerons (7) which are movable to vary the resultant and the point of application of the resultant of the pressure forces on the ailerons; characterized in that said hulls (3) are step-shaped and are thicker toward the prow and thinner toward the stern, and that the centre of gravity of the hydrohull is approximately at one third of the length of the hydrohull from the prow, its position with respect to the centre of pressure being such that the hydrohull is self-stabilizing.

2. The hydrohull as claimed in claim 1, in which the lower surface (1A) of said portion (1) with the airfoil profile is substantially plane.

3. The hydrohull as claimed in claim 1, in which the lower surface (1A) of said portion (1) with the airfoil profile is substantially concave or convex.

4. The hydrohull as claimed in one of the preceding claims, with which two ailerons (7) are associated, said ailerons being controllable independently of each other to ensure the horizontal and vertical stability of the hydrohull.

5. The hydrohull as claimed in one of the preceding claims, with which at least one vertical stabilizer (5) is associated, extending above the hydrohull and equipped with a directional rudder (5A).

6. The hydrohull as claimed in claim 5, in which there are two said vertical stabilizers, arranged symmetrically with respect to the middle of the hydrohull in the vicinity of the stern.

7. The hydrohull as claimed in one of the preceding claims, with which an auxiliary propulsion means is associated for propulsion when the hydrohull is lifted above the water.

## Patentansprüche

1. Hochgeschwindigkeits-Schiffsrumpf mit einem Mittelteil (1), der im Längsschnitt ein Tragflächenprofil mit niedrigem aerodynamischem Widerstandskoeffizienten aufweist und eine konvexe obere Fläche (1b) zur Erzeugung eines Auftriebs bei Bewegung des Schiffsrumpfes besitzt; zwei Rümpfen (3), die sich längs der Seitenwände des Mittelteiles erstrecken und unter die untere Fläche (1a) des Mittelteils (1) ragen; und Flügeln (7), die bewegbar sind, um die Resultierende der auf die Flügel wirkenden Druckkräfte und den Angriffspunkt der festgestellt wird, Resultierenden zu ändern, dadurch **gekennzeichnet,** daß die Rümpfe (3) stufenförmig und zum Bug hin dicker und zum Heck hin dünner ausgebildet sind, und daß der Schwerpunkt des Schiffsrumpfes bei etwa einem Drittel der Länge des Schiffsrumpfes vom Bug aus liegt, wobei seine Lage relativ zum Druckzentrum derart ist, daß der Schiffsrumpf selbststabilisierend ist.

2. Schiffsrumpf nach Anspruch 1, bei dem die untere Fläche (1a) des Teiles (1) mit dem Tragflächenprofil im wesentlichen eben ist.

3. Schiffsrumpf nach Anspruch 1, bei dem die untere Fläche (1a) des Teils (1) mit Tragflächenprofil im wesentlichen konkav oder konvex ist.

4. Schiffsrumpf nach einem der vorangehenden Ansprüche, dem zwei Flügel (7) zugeordnet sind, die unabhängig voneinander steuerbar sind, um die horizontale und vertikale Stabilität des Schiffsrumpfes zu gewährleisten.

5. Schiffsrumpf nach einem der vorangehenden Ansprüche, dem mindestens ein vertikaler Stabilisator (5) zugeordnet ist, der sich oberhalb des Schiffsrumpfs erstreckt und mit einem Steuerruder (5a) versehen ist.

6. Schiffsrumpf nach Anspruch 5, bei dem zwei solche vertikalen Stabilisatoren vorgesehen sind, die symmetrisch in Bezug auf die Mitte des Schiffsrumpfes in Hecknähe angeordnet sind.

7. Schiffsrumpf nach einem der vorangehenden Ansprüche, dem Hilfsantriebsmittel zugeordnet sind für den Antrieb des Schiffsrumpfs, wenn dieser bis oberhalb des Wassers angehoben ist.

## Revendications

1. Coque de bateau pour grande vitesse comportant : une partie centrale (1) ayant, en coupe longitudinale, un profit en aile d'avion avec un faible coefficient de résistance aérodynamique, ayant une surface supérieure convexe (1B) pour créer un soulèvement durant le déplacement de la coque de bateau; deux coques (3) s'étendant le long des parois latérales de la partie centrale, faisant saillie en dessous de la surface inférieure (1A) de ladite partie centrale (1); et des ailerons (7) qui sont mobiles de façon à faire varier la résultante et le point d'application de la résultante des forces de pression sur les ailerons; caractérisée en ce que lesdites coques (3) sont de forme étagée et sont plus épaisses en direction de la proue et plus fines en direction de la poupe, et en ce que le centre de gravité de la coque de bateau est approximativement situé à 1/3 de la longueur de la coque de bateau depuis la proue, sa position par rapport au centre de pression étant telle que la coque de bateau est autostabilisante.

2. Coque de bateau suivant la revendication 1, dans laquelle la surface inférieure (1A) de ladite partie (1) ayant un profit en aile d'avion est substantiellement plane.

3. Coque de bateau selon la revendication 1, dans laquelle la surface inférieure (1A) de ladite partie (1) ayant un profit en aile d'avion est substantiellement concave ou convexe.

4. Coque de bateau selon l'une des revendications précédentes, à laquelle sont associés deux ailerons (7), lesdits ailerons pouvant être contrôlés de façon indépendante l'un par rapport à l'autre afin d'assurer la stabilité horizontale et verticale de la coque de bateau.

5. Coque de bateau selon l'une des revendications précédentes, à laquelle est associé au moins un stabilisateur vertical (5), s'étendant au-dessus de la coque de bateau et équipé d'un gouvernail directionnel (5A).

6. Coque de bateau selon la revendication 5, dans laquelle se trouvent deux desdits stabilisateurs verticaux, disposés de façon symétrique par rapport au milieu de la coque de bateau au voisinage de la poupe.

7. Coque de bateau selon l'une des revendications précédentes, à laquelle sont associés des moyens de propulsion auxiliaires pour la propulsion lorsque la coque de bateau est soulevée au-dessus de l'eau.

EP 0 421 958 B1

Fig.1

7B
5
7
5A
f7
II
II
1
3
8
III

Fig.2

7
7B
7
5A
1
1B
5A
III
3
1A
3
8
8
III

## Fig.3